# EUROPEAN PATENT APPLICATION

(11) **EP 4 819 030 A1**
(43) Date of publication of application: **07.10.2026**
(21) Application number: 24897307.5
(22) Date of filing: 14.11.2024
(51) Int. Cl.: G06T 1/00

(54) **SIMULATION DEVICE, SIMULATION SYSTEM, AND CONTROL METHOD**

(30) Priority: 30.11.2023 JP 2023202495
(71) Applicant: Sony Semiconductor Solutions Corporation, Atsugi-shi, Kanagawa 243-0014 (JP)
(72) Inventor: NAKASHIMA Kenji, Atsugi-shi, Kanagawa 243-0014 (JP)
(74) Representative: Müller Hoffmann & Partner
(86) International application number: PCT/JP2024/040407
(87) International publication number: WO 2025/115620

(57) **Abstract**

The present technology relates to a simulation device, a simulation system, and a control method that enable processing of different types of image data. Provided is an image input interface configured to generate an instance, manage an address of an image memory and an image type in the instance, and determine the image type stored in the instance; and a processing unit configured to execute processing corresponding to the image type. The present technology can be applied to a simulation device that performs simulation using image data from a rendering device, for example.

## Description

### Technical Field

The present technology relates to a simulation device, a simulation system, and a control method and, for example, relates to a simulation device, a simulation system, and a control method that can standardize and handle a plurality of different types of image data.

### Background Art

In the development of automated driving systems, the image recognition algorithm is verified by simulation in a virtual space. In the verification of such an image recognition algorithm, input images extremely similar to real images are generated by a computer graphics (CG) synthesis technique using a sensor model of an image sensor.

PTL 1 proposes that the recognition performance of an image recognition algorithm can be correctly evaluated by reproducing noise or the like in the case of using an HDR image sensor.

### Citation List

### Patent Literature

PTL 1: JP 2022-99651 A

### Summary

### Technical Problem

In the simulation system proposed in PTL 1, a rendering system and a sensor model are in a one-to-one correspondence. Since the sensor model is configured with a specification suitable for a rendering system, it is difficult for the sensor model to process signals from rendering systems having different specifications. Thus, when the specification of the rendering system is changed, it is necessary to newly redesign the sensor model so as to match the rendering system.

The present technology has been made in view of such circumstances and provides a simulation device with high versatility.

### Solution to Problem

A simulation device according to an aspect of the present technology is a simulation device including: an image input interface configured to generate an instance, manage an address of an image memory and an image type in the instance, and determine the image type stored in the instance; and a processing unit configured to execute processing corresponding to the type.

A control method according to an aspect of the present technology is a control method including: by an image input interface that controls input and output of image data, generating an instance; managing an address of an image memory and an image type in the instance; and supplying the image data to a processing unit that executes processing corresponding to the type.

A simulation system according to an aspect of the present technology is a simulation system including: a rendering device; and a simulation device configured to perform a simulation using image data from the rendering device, wherein the simulation device includes an image input interface configured to generate an instance in response to an instruction from the rendering device, manage an address of an image memory in the instance, store the image data from the rendering device and an image type in the image memory, and a processing unit configured to execute processing corresponding to the type.

In the simulation device according to an aspect of the present technology, an instance is generated, the address of the image memory and the image type are managed in the instance, and processing corresponding to the type is executed from the image data and the type stored in the image memory.

In a control method according to an aspect of the present technology, the image input interface configured to control input and output of image data generates an instance, manages an address of an image memory and an image type in the instance, determines the image type stored in the instance, and supplies the image data to a processing unit configured to execute processing corresponding to the type.

The simulation system according to an aspect of the present technology includes a rendering device and a simulation device configured to perform a simulation using image data from the rendering device, wherein the simulation device generates an instance in response to an instruction from the rendering device, manages an address of an image memory in the instance, stores the image data from the rendering device and an image type in the image memory, and executes processing corresponding to the image data and the image type stored in the image memory.

Note that the simulation device may be an independent device or may be an internal block constituting one device.

### Brief Description of Drawings

[Fig. 1]

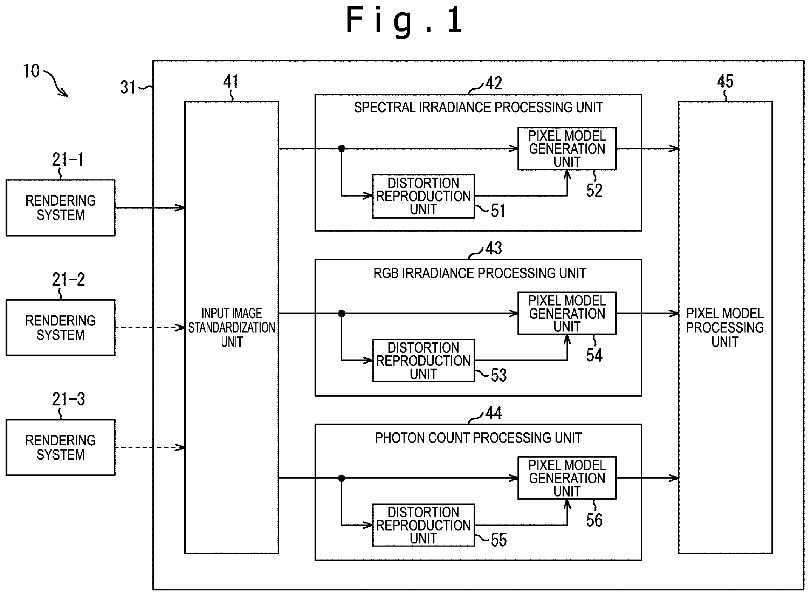

   Fig. 1 is a diagram illustrating a configuration of an embodiment of a simulation system to which the present technology is applied.
[Fig. 2]

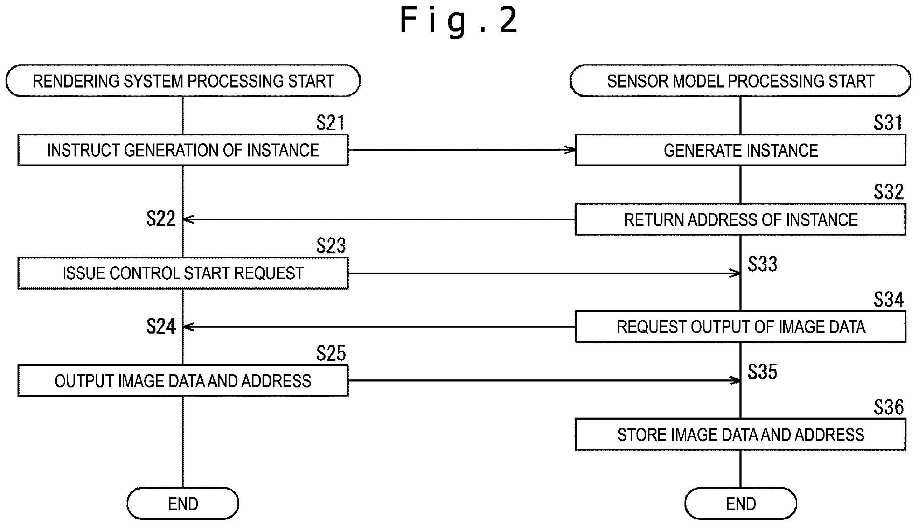

   Fig. 2 is a diagram for explaining operations of a simulation.
[Fig. 3]

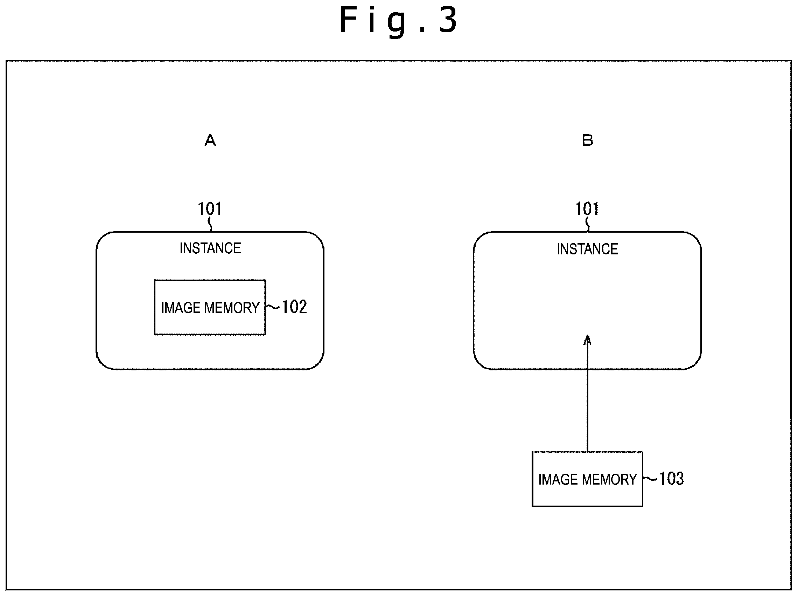

   Fig. 3 is a diagram for explaining a relationship between an instance and an image memory.
[Fig. 4]

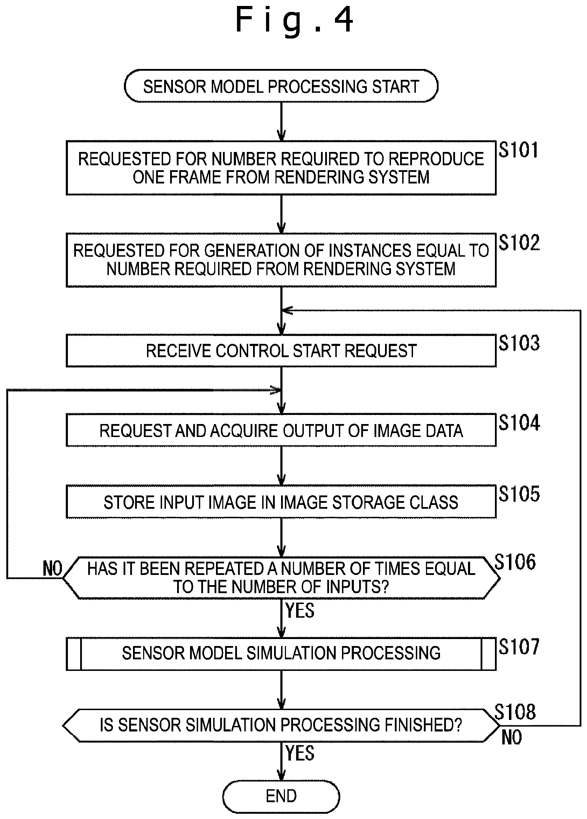

   Fig. 4 is a diagram for explaining sensor model processing.
[Fig. 5]

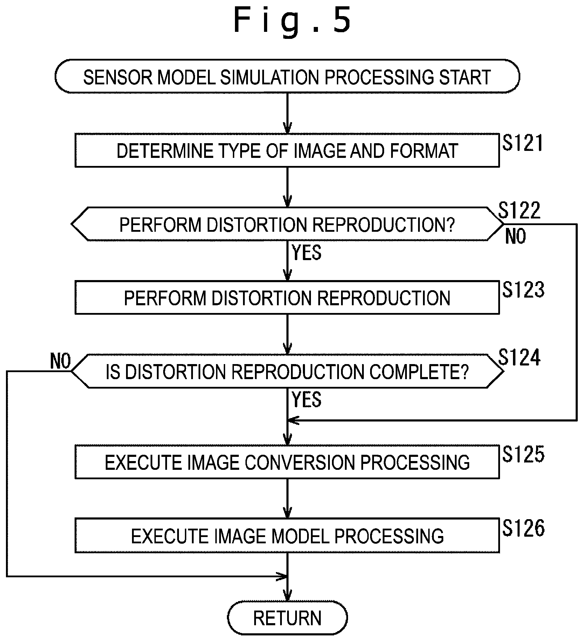

   Fig. 5 is a diagram for explaining sensor model simulation processing.
[Fig. 6]

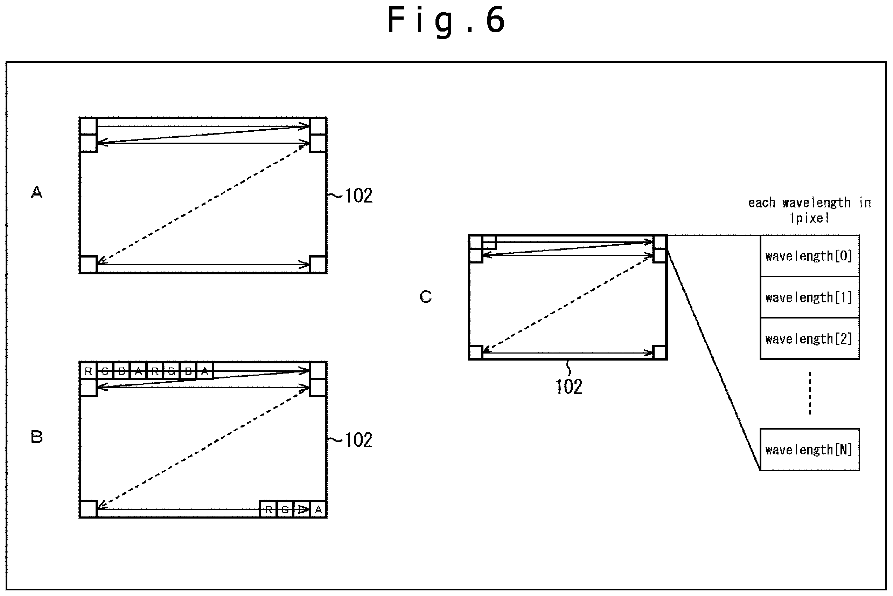

   Fig. 6 is a diagram for explaining storage of data in an image memory.
[Fig. 7]

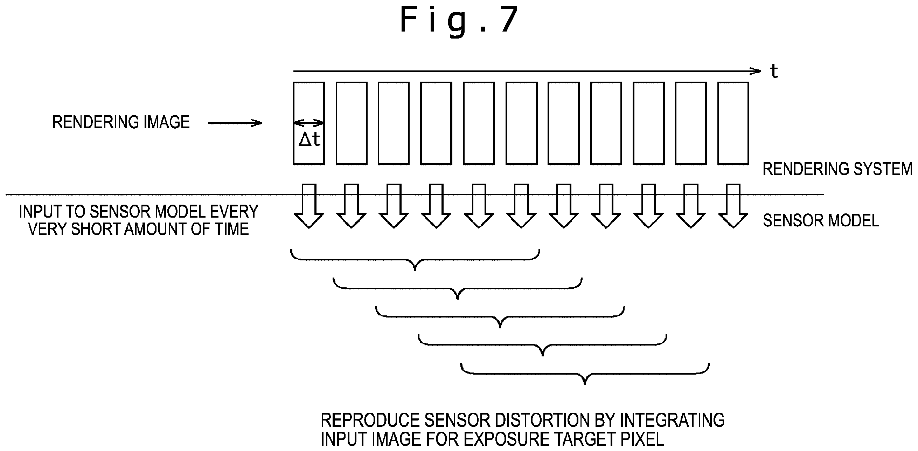

   Fig. 7 is a diagram for explaining distortion reproduction.
[Fig. 8]

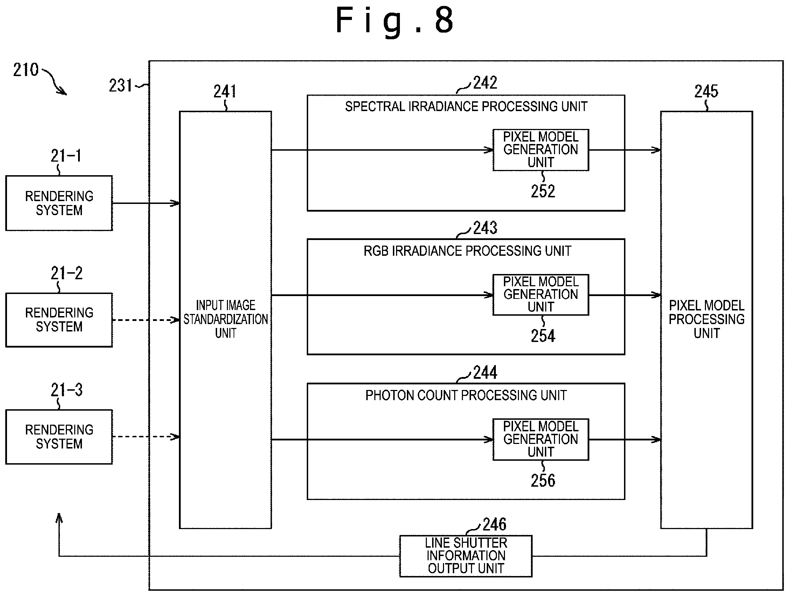

   Fig. 8 is a diagram illustrating another configuration of a simulation system.
[Fig. 9]

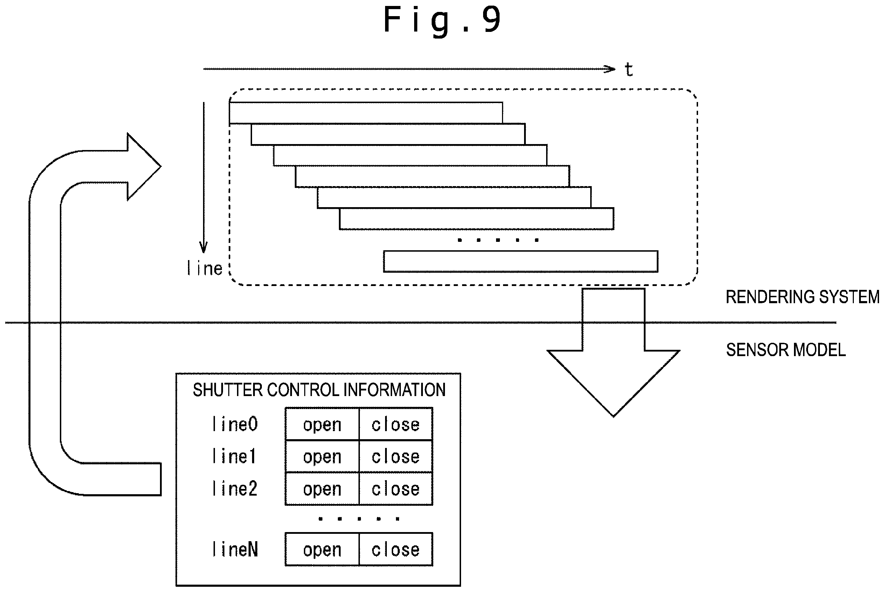

   Fig. 9 is a diagram for explaining distortion reproduction.
[Fig. 10]

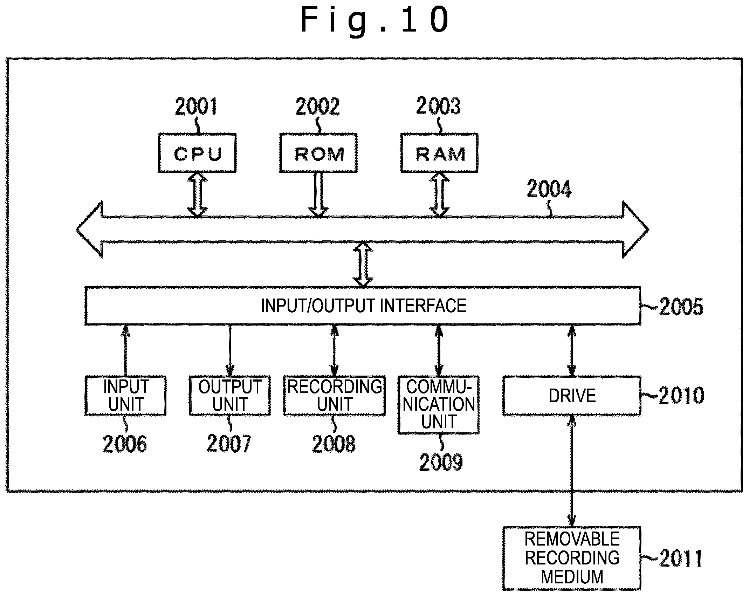

   Fig. 10 is a diagram illustrating a configuration example of a PC.

### Description of Embodiments

Hereinafter, modes for carrying out the present technology (hereinafter, embodiments) will be described.

### Configuration Example of Simulation System

Fig. 1 is a diagram illustrating a configuration example of an embodiment of a simulation system to which the present technology is applied. A simulation system 10 illustrated in Fig. 1 can be applied to, for example, a case of simulating operation of a camera system in an automated driving system for vehicles or an advanced driver assistance system (ADAS). The simulation system 10 is configured by hardware, software, or a combination thereof.

The simulation system 10 illustrated in Fig. 1 includes rendering systems (rendering devices) 21-1, 21-2, 21-3 and a sensor model 31 (simulation device). The rendering systems 21-1 to 12-3 generate image data of each pixel of a pixel model used in the sensor model 31 and supply the image data to the sensor model 31.

The rendering system 21-1 generates image data of spectral irradiance, the rendering system 21-2 generates image data of red, green, blue (RGB) irradiance, and the rendering system 21-3 generates image data of the photons count. Any one of the rendering systems 21-1 to 21-3 is connected to the sensor model 31 and is configured to supply data. In Fig. 1, the rendering system 21-1 is connected to the sensor model 31, and this is indicated by the solid line arrow. The rendering system 21-2 and the rendering system 21-3 are not connected to the sensor model 31, and this is indicated by the dotted line arrows.

Note that a state in which data is not output even though a connection is physically established is also included as a state in which a connection is not established. The rendering systems 21-1 to 21-3 are connected to the sensor model 31 in a state in which data can be output, but the present embodiment also includes a case where data is output from only one rendering system 21 from among the rendering systems 21-1 to 21-3.

In the present embodiment, the sensor model 31 is configured to be able to handle data from the plurality of rendering systems 21 that output different types of data.

The sensor model 31 includes an input image standardization unit 41, a spectral irradiance processing unit 42, an RGB irradiance processing unit 43, a photon count processing unit 44, and a pixel model processing unit 45. The spectral irradiance processing unit 42 includes a distortion reproduction unit 51 and a pixel model generation unit 52, the RGB irradiance processing unit 43 includes a distortion reproduction unit 53 and a pixel model generation unit 54, and the photon count processing unit 44 includes a distortion reproduction unit 55 and a pixel model generation unit 56.

The input image standardization unit 41 determines whether the image data supplied from the rendering system 21 is data of spectral irradiance, data of RGB irradiance, or data of the photon count and causes a processing unit in a subsequent stage to execute processing on the basis of the determination result.

The input image standardization unit 41 performs control related to input/output of image data from the rendering system 21, determines the type of the input image data, and performs control as appropriate so that processing according to the determination result is performed in a subsequent stage. The input image standardization unit 41 functions as an image input interface in the sensor model 31. Note that in the example described herein, the input image standardization unit 41 is provided in the sensor model 31, but the input image standardization unit 41 may be provided separately from the sensor model 31 or may be provided between the rendering system 21 and the sensor model 31.

When it is determined that the data is spectral irradiance data, the processing by the spectral irradiance processing unit 42 is executed. The distortion reproduction unit 51 of the spectral irradiance processing unit 42 executes processing for generating data of a pixel in which distortion is reproduced from the spectral irradiance data. The pixel model generation unit 52 executes processing of changing the spectral irradiance data into data of a pixel model. For example, the spectral irradiance data supplied from the rendering system 21-1 is a value for each wavelength, and the pixel model generation unit 52 of the spectral irradiance processing unit 42 performs integration processing on the value for each wavelength according to the quantum conversion efficiency of the sensor and thereafter converts the value into a value inside the sensor model 31, for example, the electron count, in consideration of the pixel size and the exposure time.

When it is determined that the data is RGB irradiance data, the processing by the RGB irradiance processing unit 43 is executed. The distortion reproduction unit 53 of the RGB irradiance processing unit 43 executes processing for generating data of a pixel in which distortion is reproduced from the RGB irradiance data. The pixel model generation unit 54 executes processing of changing the RGB irradiance data into data of a pixel model. For example, the RGB irradiance data supplied from the rendering system 21-2 is an energy value spectrally separated into RGB, and the pixel model generation unit 54 of the RGB irradiance processing unit 43 performs matrix calculation processing from the energy value spectrally separated into RGB and converts the value into a value inside the sensor model 31, for example, the electron count, in consideration of the pixel size and the exposure time.

When it is determined that the data is photon count data, the processing by the photon count processing unit 44 is executed. The distortion reproduction unit 55 of the photon count processing unit 44 executes processing for generating data of a pixel in which distortion is reproduced from the photon count data. The pixel model generation unit 56 executes processing of changing the photon count data into data of a pixel model. For example, the photon count data is supplied from the rendering system 21-3, and the pixel model generation unit 56 of the photon count processing unit 44 converts the input image represented by the photon count data into a value inside the sensor model 31, for example, the electron count.

The pixel model data from the spectral irradiance processing unit 42, the RGB irradiance processing unit 43, or the photon count processing unit 44 is supplied to the pixel model processing unit 45, converted into an imaging signal by being subjected to predetermined processing, and output to an application (not illustrated) in a subsequent stage.

### Operation of Simulation System

An outline of the operation of the simulation system 10 illustrated in Fig. 1 will be described with reference to the flowchart of Fig. 2, and the detailed operation of the sensor model 31 will be described with reference to the flowcharts of Figs. 4 and 5. In the examples described below, the image data of the spectral irradiance is supplied from the rendering system 21 to the sensor model 31, and processing is executed by the spectral irradiance processing unit 42.

In step S21, the rendering system 21 instructs the sensor model 31 to generate an instance. When the sensor model 31 receives an instance generation instruction from the rendering system 21 in step S31, the sensor model 31 starts generating an instance. The number of instances generated is equal to the number of inputs required to generate one frame.

In step S32, the sensor model 31 returns the address of the instance to the rendering system 21.

The relationship between the instances and the image memory will be described with reference to Fig. 3. As illustrated in A of Fig. 3, the sensor model 31 generates an instance 101 managed by the sensor model 31. An image memory 102 (the address of the image memory 102) managed by the sensor model 31 is registered in the generated instance 101. In this case, the instance 101 and the image memory 102 are in the sensor model 31, and the address of the instance 101 is returned to the rendering system 21.

As illustrated in B of Fig. 3, the instance 101 managed by the sensor model 31 is generated, and an image memory 103 (an address of the image memory 103) managed outside the sensor model 31 is registered in the instance 101. In this case, the address of the instance 101 is returned to the rendering system 21.

In the example described below, as illustrated in A of Fig. 3, the instance 101 and the image memory 102 are managed in the sensor model 31, and the address of the image memory 102 is registered in the instance 101.

When the rendering system 21 receives the address of the instance 101 from the sensor model 31 in step S22 (Fig. 2), the rendering system 21 issues a control start request to the sensor model 31 in step S23. When the sensor model 31 receives the control start request from the rendering system 21 in step S33, the sensor model 31 starts control. The control start request is issued by, for example, executing a Tick () function.

In step S34, the sensor model 31 requests the rendering system 21 to output image data. In step S24, the rendering system 21 that has received the request to output image data from the sensor model 31 registers the image data in the image memory 102 in the instance 101 and outputs the address of the instance 101 in step S25.

When the sensor model 31 receives the image data and the address from the rendering system 21 in step S35, the received image data is retrieved and managed in the sensor model 31 in step S36. For example, a GetImage () function is used for the transmission and reception of the image data. Such transmission and reception of image data are repeated a number of times equal to the number of inputs required to generate one frame.

The sensor model 31 executes processing of generating a pixel model using the image data being managed.

### Processing of Sensor Model

The processing in the sensor model 31 will be further described with reference to the flowchart illustrated in Fig. 4.

In step S101, the input image standardization unit 41 of the sensor model 31 is requested by the rendering system 21 to acquire the number of inputs required to generate one frame. The sensor model 31 passes the number of inputs required to generate one frame to the rendering system 21.

In step S102, the rendering system 21 requests the input image standardization unit 41 of the sensor model 31 to generate image storage class instances for sensor model input a number of times equal to the number of inputs required to generate one frame. The sensor model 31 generates the instance 101 and returns its address to the rendering system 21.

In step S103, the input image standardization unit 41 receives a control start request from the rendering system 21. In step S104, the input image standardization unit 41 requests the rendering system 21 to output the instance 101 in which the image data is stored and acquires the image data supplied from the rendering system 21 in response to the request. The image data acquired at this time is image data corresponding to one of the number of images (image data corresponding to a unit of processing) acquired when the number of inputs required to generate one frame is acquired.

In step S104, the input image standardization unit 41 stores the input image data in the image storage class, and in this case, retrieves the image data of the image memory 102 whose address is managed in the instance 101.

The processing up to this point will be described again. In step S102, when an instance is generated, the size of the image memory 102 is set from the rendering system 21 side.

As described with reference to A of Fig. 3, the address of the image memory 102 generated by the sensor model 31 is registered in the instance 101 and managed by the sensor model 31. Alternatively, as described with reference to B of Fig. 3, the address of the image memory 102 outside the sensor model 31 is registered in the instance 101 from the rendering system 21 and managed by the sensor model 31.

In the case of B of Fig. 3, the width, height, and image type of the image are set from the rendering system 21 at the time of registration. The size of the image is managed by the instance 101 according to the width, height, and image type of the image. As the image memory 102, a graphics processing unit (GPU) or a central processing unit (CPU) can be designated.

As will be described with reference to Fig. 6, the content of data stored in the image memory 102, in other words, the manner of storage (data handled as one pixel), differs for each type of image. The image type is set when the rendering system 21 registers an image in the instance 101. Accordingly, the sensor model 31 can acquire the image type stored in the instance.

When the photon count data is stored in the image memory 102, as illustrated in A of Fig. 6, the data of one photon count per pixel is stored serially in the order of the pixels. When the RGB irradiance data is stored in the image memory 102, as illustrated in B of Fig. 6, data of red (R), green (G), blue (B), and alpha channel (A) representing one pixel is stored serially in the order of the pixels. Note that the data of alpha channel (A) need not be stored in the image memory 102.

When the spectral irradiance data is stored in the image memory 102, as illustrated in C of Fig. 6, all wavelength data is stored serially for each image. The all wavelength data is data for wavelength intervals from the minimum wavelength to the maximum wavelength. As illustrated in the right diagram C of Fig. 6, data from wavelength [0] which is the minimum wavelength to wavelength [N] which is the maximum wavelength is stored in one pixel.

In step S106, the input image standardization unit 41 determines whether or not the acquisition of image data has been repeated for a number of times equal to the number of inputs required to generate one frame. If it is determined in step S106 that the acquisition of image data has not been performed for a number of times equal to the number of inputs required to generate one frame, the processing returns to step S104, and the subsequent processing is repeated. If it is determined in step S106 that the acquisition of image data has been performed for a number of times equal to the number of inputs required to generate one frame, the processing advances to step S107.

In step S107, simulation processing of the sensor model is executed. The simulation processing of the sensor model executed in step S107 will be described with reference to the flowchart of Fig. 5.

In step S121, the input image standardization unit 41 determines the type and format of the image supplied from the rendering system 21. The type of image is, for example, spectral irradiance, RGB irradiance, photon count, or the like. The format is, for example, a 16-bit floating-point format, a 32-bit floating-point format, a 64-bit floating-point format, or the like.

As described with reference to Fig. 6, the image memory 102 stores data for one pixel in an area corresponding to one pixel, and the input image standardization unit 41 acquires the type of the image in the instance 101 to determine the type of the image or references the image data stored in the image memory 102 to determine the format.

In step S122, whether or not to perform distortion reproduction is determined. In step S122, in a case where it is determined to perform distortion reproduction, the processing advances to step S123. In step S123, distortion reproduction is performed by the distortion reproduction unit 51 (Fig. 1). The processing relating to the distortion reproduction will be described with reference to Fig. 7.

The rendering system 21 generates a rendering image of a very short amount of time, and the rendering image is supplied to the sensor model 31 for each very short amount of time. Since the rendering image of a very short amount of time is handled as input image data of one time, step S103 (Fig. 4) to step S108 (Fig. 4) are repeatedly executed, and the calculation of the distortion correction is executed after the processing has been executed a number of times corresponding to the amount of time constituting one frame or during the repeated executions.

The distortion reproduction unit 51 of the sensor model 31 reproduces sensor distortion by integrating the supplied rendering image for the pixel which is the exposure target. In step S124, it is determined whether or not image data having sensor distortion reproduced by the distortion reproduction unit 51 has been generated, and in a case where it has been generated, the image data is supplied to the pixel model generation unit 52. For example, when the spectral irradiance data is supplied, the image data of the spectral irradiance in which the sensor distortion is reproduced is generated in the distortion reproduction unit 51 and supplied to the pixel model generation unit 52.

On the other hand, in step S124, in a case where it is determined that image data having sensor distortion reproduced by the distortion reproduction unit 51 has not been generated, the image data is not supplied to the pixel model generation unit 52 and input of the next rendering image of a very short amount of time is waited for. That is, in this case, the processing is returned to step S103 (Fig. 4), and the subsequent processing is repeated, whereby the necessary rendering image is input.

On the other hand, in step S122, in a case where it determined to not perform distortion reproduction, the processing advances to step S125. In step S125, image conversion processing is executed. The image data is supplied to the processing unit that processes an image corresponding to the type determined by the input image standardization unit 41, and the processing is executed. In a case where the input image standardization unit 41 determines that the type of the image is spectral irradiance, the image data is supplied to the pixel model generation unit 52 of the spectral irradiance processing unit 42, and, for example, processing of converting the spectral irradiance data into electron count data is executed.

In a case where the input image standardization unit 41 determines that the type of the image is RGB irradiance, the image data is supplied to the pixel model generation unit 54 of the RGB irradiance processing unit 43, and, for example, processing of converting the RGB irradiance data into electron count data is executed.

In a case where the input image standardization unit 41 determines that the type of the image is photon count, the image data is supplied to the pixel model generation unit 56 of the photon count processing unit 44, and, for example, processing of converting the photon count data into electron count data is executed.

The data processed by the spectral irradiance processing unit 42, the RGB irradiance processing unit 43, or the photon count processing unit 44 is supplied to the pixel model processing unit 45. In step S126, the pixel model processing unit 45 executes predetermined processing on the supplied pixel model to generate an imaging signal. When such processing is executed in step S107 (Fig. 4), the processing of the sensor model 31 for the image of one frame is completed, a loop is performed via step S108, and the processing returns to step S103 (Fig. 4) in which a control start request of the next input is received.

As described above, the input image standardization unit 41 has a function of generating an instance in response to a request from the rendering system 21. The input image standardization unit 41 has a function of registering and managing addresses of the memory for images from the rendering system 21. At the time of registration, the width, height, and type of the image are set from the rendering system 21. The input image standardization unit 41 has a function of passing image information such as width and height to the rendering system. The input image standardization unit 41 also has a function of passing the address of the image memory to the rendering system 21.

The input image standardization unit 41 has a function of receiving a setting of wavelength information (minimum wavelength, maximum wavelength, wavelength resolution) of spectral irradiance from the rendering system 21 and passing the wavelength information for spectral irradiance to the rendering system 21. The input image standardization unit 41 has a function of receiving a setting of information of each of R, G, B, and A of the RGB irradiance from the rendering system 21 and passing the information for the RGB irradiance to the rendering system 21. The input image standardization unit 41 has a function of receiving a setting of the information of the photon count from the rendering system 21 and passing the information of the photon count to the rendering system 21.

The input image standardization unit 41 or the instance can receive the setting of the pixel value gain from the rendering system 21 and request the sensor model 31 to multiply all the pixel values of the image data by the gain uniformly. A function of passing the pixel value gain to the rendering system 21 may also be provided.

The input image standardization unit 41 has these functions and thus can collectively handle image data from the rendering systems 21 that handle different types of image data.

### Configuration of Sensor Model in Second Embodiment

Fig. 8 is a diagram illustrating a configuration example of a sensor model according to the second embodiment. A sensor model 231 illustrated in Fig. 8 includes an input image standardization unit 241, a spectral irradiance processing unit 242, an RGB irradiance processing unit 243, a photon count processing unit 244, and a pixel model processing unit 245. The spectral irradiance processing unit 242 includes a pixel model generation unit 252, the RGB irradiance processing unit 243 includes a pixel model generation unit 254, and the photon count processing unit 244 includes a pixel model generation unit 256.

The sensor model 231 is different from the sensor model 31 illustrated in Fig. 1 in that the distortion reproduction unit 51, 53, 55 is removed. The sensor model 231 further includes a line shutter information output unit 246 that outputs line shutter information from the pixel model processing unit 245 to the rendering system 21.

The sensor model 231 according to the second embodiment is not configured to execute the distortion reproduction in the sensor model 231, but is configured to acquire the image data on which distortion reproduction has been performed from the rendering system 21.

The processing related to distortion reproduction will be described with reference to Fig. 9. In order for the rendering system 21 to generate image data of an image on which distortion reproduction has been performed, the line shutter information output unit 246 of the sensor model 231 acquires shutter control information in which an exposure start time (open) and an exposure end time (close) are associated with each other for each line from the pixel model processing unit 245 and supplies the shutter control information to the rendering system 21.

The rendering system 21 generates a frame in which distortion is reproduced using the shutter control information supplied from the sensor model 231 and supplies the image data to the sensor model 231.

The sensor model 231 according to the second embodiment basically operates in the same manner as the sensor model 31 according to the first embodiment, and thus the description thereof is omitted.

According to the present technology, by providing the input image standardization unit 41 (241) in the sensor model 31 (231), the standards of images input to the sensor model 31 can be unified, and signals from the plurality of rendering systems 21, in other words, image data of different types can be processed. Typically, the rendering system 21 and the sensor model 31 (231) are in a one-to-one correspondence, but may be in plural-to-one correspondence, and for example, even when the rendering system 21 is changed, the sensor model 31 (231) can process image data from the rendering system 21 after replacement.

Even when the rendering system 21 is changed, it is not necessary to redesign the sensor model 31 (231), and it is possible to provide the sensor model 31 (231) with high versatility.

By providing the distortion reproduction unit 51 or the line shutter information output unit 246, it is possible to reproduce distortion specific to the image sensor generated in the actual image sensor, and it is possible to perform a more accurate simulation.

### Recording Medium

The above-described series of processing steps can be executed by hardware or software. When the series of processing steps is executed by the software, a program constituting the software is installed on a computer. Here, the computer includes a computer built into dedicated hardware, or a general-purpose personal computer, for example, that can execute various functions by installing various programs.

Fig. 10 is a block diagram illustrating a configuration example of hardware of a computer that executes the above-described series of processing by a program. In the computer, a central processing unit (CPU) 2001, a read only memory (ROM) 2002, and a random access memory (RAM) 2003 are connected to one another via a bus 2004. Furthermore, an input/output interface 2005 is connected to the bus 2004. An input unit 2006, an output unit 2007, a storage unit 2008, a communication unit 2009, and a drive 2010 are connected to the input/output interface 2005.

The input unit 2006 is composed of a keyboard, a mouse, a microphone, and the like. The output unit 2007 is composed of a display, a speaker, and the like. The storage unit 2008 is composed of a hard disk, a nonvolatile memory, and the like. The communication unit 2009 is composed of a network interface and the like. The drive 2010 drives a removable medium 2011 such as a magnetic disk, an optical disk, a magneto-optical disk, or a semiconductor memory.

In the computer configured as described above, the CPU 2001, for example, loads a program stored in the storage unit 2008 into the RAM 2003 via the input/output interface 2005 and the bus 2004 and executes the program, thereby performing the series of processing described above.

The program executed by the computer (CPU 2001) can be provided by being recorded in the removable medium 2011 as a package medium or the like, for example. The program can also be provided via a wired or wireless transmission medium, such as a local area network, the Internet, or digital satellite broadcasting.

In the computer, the program can be installed in the storage unit 2008 via the input/output interface 2005 by mounting the removable medium 2011 on the drive 2010. Further, the program can be received by the communication unit 2009 via a wired or wireless transmission medium and installed in the storage unit 2008. In addition, the program can be installed in advance in the ROM 2002 or the storage unit 2008.

Note that the program executed by the computer may be a program for executing the processing in time series in the order described in the present specification, or may be a program for executing the processing in parallel or at a necessary timing such as when a call is performed.

In the present specification, the system represents a device as a whole constituted by a plurality of devices.

Note that the effects described in the present specification are merely examples and are not limited, and other effects may be provided.

Note that the embodiments of the present technology are not limited to the embodiments described above, and can be modified within a range that does not depart from the gist of the present technology.

The present technology may also adopt configurations as described below.
(1) A simulation device includes:
   an image input interface configured to
   generate an instance,
   manage an address of an image memory and an image type in the instance, and
   determine the image type from the instance; and
   a processing unit configured to execute processing corresponding to the image type.
(2) In the simulation device according to (1),
   the simulation device acquires image data of an image of a predetermined amount of time from a rendering device, and
   reproduces distortion of a sensor using the image data of the image of the predetermined amount of time.
(3) In the simulation device according to (1),
   the simulation device supplies shutter information including an exposure start time and an exposure end time to a rendering device, and
   acquires image data of an image with distortion reproduced from the rendering device.
(4) In the simulation device according to any one of (1) to (3),
   the image type is one of spectral irradiance; red, green, blue (RGB) irradiance; or photon count.
(5) In the simulation device according to any one of (1) to (4),
   the instance manages an address of an image memory allocated inside the simulation device or manages an address of an image memory allocated outside the simulation device.
(6) In the simulation device according to (4),
   the image input interface stores, in the image memory,
   image data of the spectral irradiance representing one pixel per pixel,
   image data of the RGB irradiance representing one pixel per pixel, or
   image data of the photon count representing one pixel per pixel.
(7) A control method includes:
   by an image input interface configured to control input and output of image data,
   generating an instance;
   managing an address of an image memory and an image type in the instance;
   determining the image type from the instance; and
   supplying the image data to a processing unit configured to execute processing corresponding to the image type.
(8) A simulation system includes:
   a rendering device; and
   a simulation device configured to perform a simulation using image data from the rendering device, wherein
   the simulation device includes
   an image input interface configured to
   generate an instance in response to an instruction from the rendering device,
   manage an address of an image memory in the instance,
   store the image data from the rendering device and an image type in the image memory, and
   determine the image type stored from the image memory, and
   a processing unit configured to execute processing corresponding to the image type.

### Reference Signs List

10 Simulation system 21 Rendering system 31 Sensor model 41 Input image standardization unit 42 Spectral irradiance processing unit 43 RGB irradiance processing unit 44 Photon count processing unit 45 Pixel model processing unit 51 Distortion reproduction unit 52 Pixel model generation unit 53 Distortion reproduction unit 54 Pixel model generation unit 55 Distortion reproduction unit 56 Pixel model generation unit 101 Instance 102 Image memory 103 Image memory 231 Sensor model 241 Input image standardization unit 242 Spectral irradiance processing unit 243 RGB irradiance processing unit 244 Photon count processing unit 245 Pixel model processing unit 246 Line shutter information output unit 252 Pixel model generation unit 254 Pixel model generation unit 256 Pixel model generation unit

## Claims

1. A simulation device comprising:
an image input interface configured to
generate an instance,
manage an address of an image memory and an image type in the instance, and
determine the image type from the instance; and
a processing unit configured to execute processing corresponding to the image type.

2. The simulation device according to claim 1, wherein
the simulation device acquires image data of an image of a predetermined amount of time from a rendering device, and
reproduces distortion of a sensor using the image data of the image of the predetermined amount of time.

3. The simulation device according to claim 1, wherein
the simulation device supplies shutter information including an exposure start time and an exposure end time to a rendering device, and
acquires image data of an image with distortion reproduced from the rendering device.

4. The simulation device according to claim 1, wherein
the image type is one of spectral irradiance; red, green, blue (RGB) irradiance; or photon count.

5. The simulation device according to claim 1, wherein
the instance manages an address of an image memory allocated inside the simulation device or manages an address of an image memory allocated outside the simulation device.

6. The simulation device according to claim 4, wherein
the image input interface stores, in the image memory,
image data of the spectral irradiance representing one pixel per pixel,
image data of the RGB irradiance representing one pixel per pixel, or
image data of the photon count representing one pixel per pixel.

7. A control method comprising:
by an image input interface configured to control input and output of image data,
generating an instance;
managing an address of an image memory and an image type in the instance;
determining the image type from the instance; and
supplying the image data to a processing unit configured to execute processing corresponding to the type.

8. A simulation system comprising:
a rendering device; and
a simulation device configured to perform a simulation using image data from the rendering device, wherein
the simulation device includes
an image input interface configured to
generate an instance in response to an instruction from the rendering device,
manage an address of an image memory in the instance,
store the image data from the rendering device and an image type in the image memory, and
determine the image type stored from the image memory, and
a processing unit configured to execute processing corresponding to the image type.
